(19) **Europäisches Patentamt**

**European Patent Office**

**Office européen des brevets**

(11) Publication number: **0 289 975 B1**

# EUROPEAN PATENT SPECIFICATION

(45) Date of publication of patent specification: **06.11.91** (51) Int. Cl.5: **H02J 3/20**

(21) Application number: **88106999.1**

(22) Date of filing: **02.05.88**

(54) Series capacitor equipment.

(30) Priority: **04.05.87 SE 8701825**

(43) Date of publication of application:
**09.11.88 Bulletin 88/45**

(45) Publication of the grant of the patent:
**06.11.91 Bulletin 91/45**

(84) Designated Contracting States:
**AT DE FR GB IT**

(56) References cited:
**DE-C- 608 748**
**DE-C- 714 528**
**DE-C- 759 533**
**DE-C- 892 181**

**DERWENT'S ABSTRACT no H3173C/34**
**SE706905 (SHESTERENKOLA) 31.12.1979**

(73) Proprietor: **ASEA BROWN BOVERI AB**

**S-721 83 Västeras(SE)**

(72) Inventor: **Johansson, Rutger**
**Kyndelstigen 22**
**S-771 00 Ludvika(SE)**
Inventor: **Paulsson, Lars**
**Ishavsvägen 18**
**S-722 31 Västeras(SE)**

(74) Representative: **Boecker, Joachim, Dr.-Ing.**
**Rathenauplatz 2-8**
**W-6000 Frankfurt a.M. 1(DE)**

Rank Xerox (UK) Business Services

## Description

The invention relates to series capacitor equipment according to the precharacterising part of Claim 1.

Series capacitors are used in transmission lines for the transmission of electrical power. By compensating the inductance of a line with the series capacitors, considerable advantages are gained, above all an increase of the power transmission capacity of the line.

From the abstract of SU 706 905 it is previously known to vary the capacitance of series capacitor equipment by switching in and out one single sub-capacitor connected in series with the fixed capacitor bank of the equipment. Thus the capacitance can only be varied in two steps. Nothing is mentioned about the design of the switching member or about how the energy for its control and operation is obtained.

From DE-PS 714 528 and 759 533 it is known to arrange a tap selector and a diverter switch for connecting shunt capacitors into a network and for disconnection and discharge of the capacitors, respectively. These switching members are not traversed by the load current in that power line to which the capacitor equipment is connected. The requirements as to the current carrying capacity and reliability of the capacitor equipment are therefore much lower than in series capacitor equipment, which is subjected to transient and fault currents in the network.

DE-PS 892 181 describes a device in a synchronously operating on-load tap-changer. No suggestion of its use in connection with series capacitor equipment is given.

The invention aims to provide series capacitor equipment the capacitance of which is controllable in a plurality of steps, and which has a practical and economically favourable construction, a high working life and low service requirements.

To achieve this aim the invention suggests a series capacitor equipment according to the introductory part of Claim 1, which is characterized by the features of the characterizing part of Claim 1.

Further developments of the invention are characterized by the features of the additional claims.

By changing the capacitance of the series capacitor, the degree of compensation can be changed in steps. This means that the power flow in large alternating voltage networks can be continuously influenced, which provides a possibility of minimizing the line losses, of increasing the capacity and the reliability of the power transmission, and of increasing the possibilities for electric energy transition through a network.

By arranging the switching members at the potential of the power line on a platform insulated from ground, preferably on the same platform as the capacitors, according to the invention, no or only low requirements for insulation are placed on the switching members, on its bushings and leads, etc., which provides substantial economic and practical advantages.

In equipment according to the invention, the switching members for switching of the capacitance consist of such switching members which are used as on-load tap-changers in transformers. These switching members are robust and relatively inexpensive, they have a high reliability and withstand a very large number of switching operations between overhauls. Furthermore, such switching members comprise such impedance elements which are required for a switching of the capacitor bank which is favourable from the point of view of oscillation.

Such a switching member will have low losses and sufficient speed of action to enable control of the power flow in a transmission network. The normally great problems of arranging a main circuit component at a high potential relative to ground (difficulties in supplying auxiliary and driving power, difficulties with respect to supervision, overhaul and repairs) are solved according to the invention in a simple and advantageous way. That part of the on-load tap-changer which requires auxiliary power and frequent maintenance, namely the drive device, is arranged according to the invention at ground potential and drives the tap-changer via one or more insulated rods, shafts or the like. In this way also the problem of transmitting, from ground to the potential of the power line, control signals for switching of the series capacitor is eliminated.

The invention will now be described in greater detail with reference to the accompanying drawings showing - by way of example - in

Figure 1     a series capacitor equipment according to the invention, the capacitor bank comprising one fixed main capacitor and a plurality of switchable step capacitors, an on-load tap-changer comprising a tap selector and a diverter switch being used for switching in and out the step capacitors,

Figure 2     a second embodiment of a series capacitor equipment according to the invention, in which a tap-changer designed as a so-called selector switch is used for switching in and out the step capacitors,

Figure 3     an example of the physical construction of equipment according to the invention,

Figure 4     a construction similar to that of Figure 3 with the operating member for the tap-changer arranged outside of an enclosure enclosing the equipment.

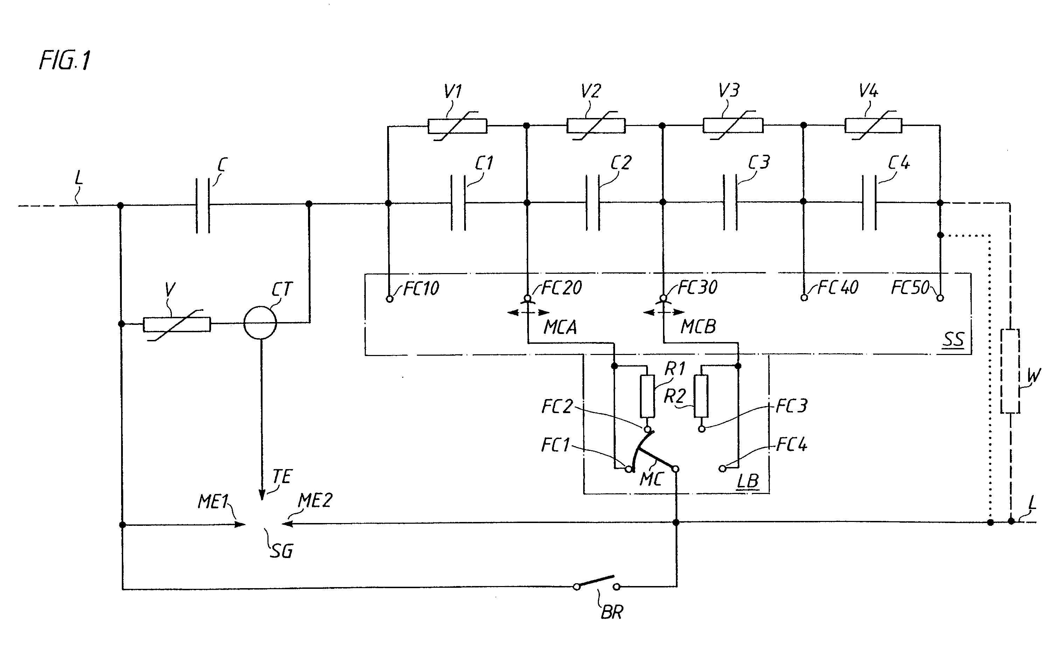

Figure 1 shows a series capacitor equipment according to the invention for one phase. In a three phase power transmission line the total series capacitor equipment normally comprises three series capacitor equipment units, each for one phase and each one being designed in the same way as shown in Figure 1. The actual series capacitor is switched into a power line L and comprises one fixed main capacitor C and a number of switchable step capacitors C1-C4. The main capacitor C is so dimensioned as to generate the main part of the reactive power of the capacitor equipment, whereas each one of the step capacitors C1-C4 is responsible for a smaller part. Figure 1 shows only four switchable step capacitors , but the number may be both greater or smaller, the size of each switchable step capacitor being adapted such that a suitable size of the switching steps is obtained.

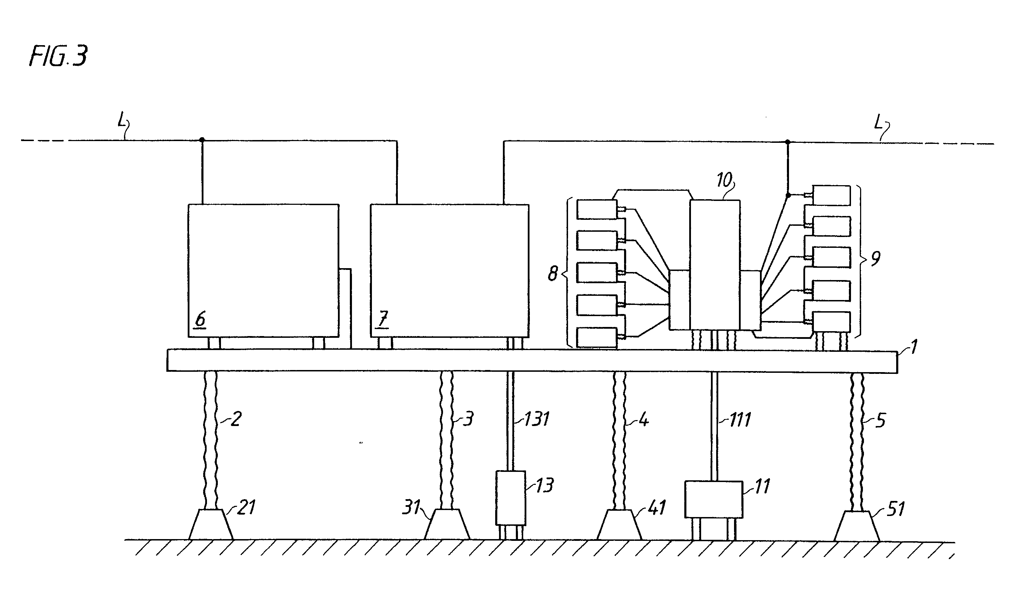

The switching members consist of on-load tap-changer equipment with one tap selector SS and one diverter switch LB. The diverter switch is of the type included in tap-changers for power transformers. The diverter switch may, for example, be of the kind as described in the ASEA pamphlet ZF22-007E, Figure 3 (unit b) and Figure 12. Such a diverter switch has four fixed contacts FC1-FC4 and one movable contact MC which is designed so as to make movable contact with two, but not three, of the fixed contacts. The fixed contacts FC1 and FC4 are directly connected to said contacts MCA and MCB of the tap selector SS. The fixed contacts FC2 and FC3 are connected to the contacts of the tap selector via resistances R1 and R2, respectively. The tap selector may, for example, be of the ASEA type UC, which is described in the above-mentioned ASEA pamphlet ZF22-007E. The tap selector SS comprises a number of fixed contacts FC10-FC50, and the two movable contacts MCA and MCB which are connected to the diverter switch LB. In a known manner in connection with tap-changers, a first one of the movable contacts (MCA in Figure 1), in stationary state, is current-carrying and the other movable contact (MCB in Figure 1) is currentless. The currentless contact can then be moved to the desired adjacent fixed contact, whereupon a transition from the former to the latter contact is made with the aid of the diverter switch. In the position shown in Figure 1, the movable contact MCA connected to the contact FC20 is connected to the power line L via the diverter switch. The step capacitor C1, but not the other step capacitors, is then connected in series with the main capacitor bank C. Connection of one further step capacitor- C2 - can then be performed by connecting the movable contact MCB of the tap selector to the right-hand side of the line L in Figure 1 with the aid of the diverter switch, the contact MCA thus becoming currentless. The latter contact can then be moved, in currentless state, to the next desired fixed contact, for example FC40, whereupon a connection of one further step capacitor- C3 -can be made with the aid of the diverter switch.

During a short interval during the movement of the diverter switch, it makes contact with both of the actual fixed contacts FC20 and FC30, the capacitor C2 thus being charged and the current being divided between the resistor R1 and the capacitor C2.

When disconnecting a step capacitor, the resistors included in the diverter switch prevent the step capacitors from being short-circuited via the movable contact MC of the diverter switch.

The capacitor equipment is provided with protective means, for example according to the principles described in IEEE PROC., Vol. 128, Pt. C, No. 6, Nov. 1981: "EHV series capacitor equipment protection and control" (N.T. Fahlén). Each part capacitor is provided in a known manner with an over-voltage protective means in the form of a varistor, V, V1-V4. A triggered spark gap SG is connected in parallel with the entire equipment.

The spark gap has two main electrodes ME1 and ME2 and an ignition electrode TE, which triggers the spark gap in dependence on the current through the varistor V. The varistor current is sensed with the aid of a current transformer CT connected in series with the varistor. In parallel with the entire series capacitor there is also connected a bypass breaker BR, which in undisturbed operation is open but which is automatically closed in the event of a fault in the equipment.

If desired, an impedance element W may be connected between the power line L and the free end of the outermost step capacitors C4. The impedance element may, for example, consist of a resistor, typically with a resistance of 100 ohm. This impedance element is shown in Figure 1 in dashed lines. Alternatively, as shown by a dotted line in Figure 1, the free end of the step capacitor C4 may be directly connected to the power line L. These three alternatives shown in Figure 1 are all useful and offer different advantages. However, the lowest demands on breaking capacity of the diverter switch LB are placed if there is no connection at all between the step capacitor C4 and the power line L, since then the step capacitors located on the righthand side of the actual position of the tap selector, as shown in the figure, do not take part in the switching operation.

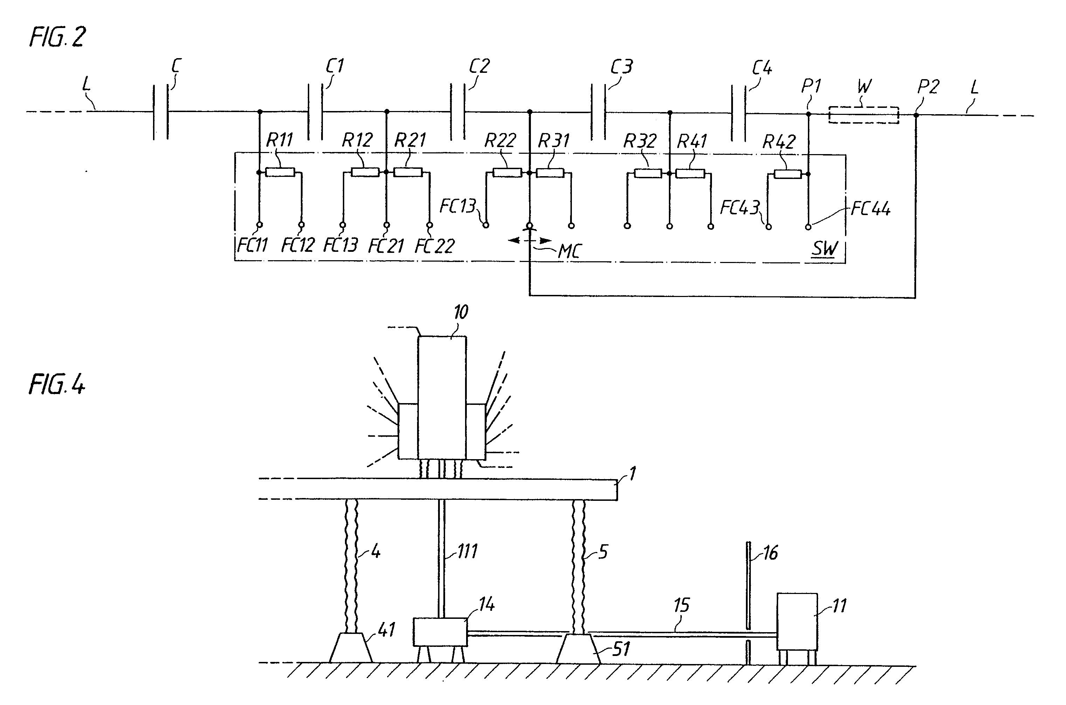

Figure 2 shows an additional embodiment of the invention, in which the switching member for switching of the effective capacitance of the equipment consists of a so-called selector switch SW of the type as is used for switching of windings in power transformers. The selector switch has one movable contact system MC, which moves between a set of fixed contacts FC11-FC44. The fixed contacts FC11, FC21, etc. are directly connected to the associated step capacitor. Between each adjacent pair of these fixed contacts, two additional fixed contacts, for example FC12 and FC13, are arranged and, via resistors, for example R11 and R12, connected to the step capacitors. The movable contact system MC makes contact with two fixed contacts at a time but not with three contacts. The contact MC is shown in the figure in such a stationary position in which the step capacitors C3 and C4 are short-circuited and, therefore, bypassed. When, for example, switching out the step capacitor C2, the contact MC is moved to the left in the figure until it makes contact with the contact FC21. During an interval during this switching sequence, the contact MC makes contact with both contacts FC22 and FC13, the resistors R21 and R22 preventing a direct short-circuiting of the step capacitor C2.

In the same way as described with reference to Figure 1, the connection between points P1 and P2 can be completely omitted, or be replaced by an impedance element W.

The selector switch shown in Figure 2 is only an example. An alternative embodiment of a selector switch is the ASEA selector switch type UZ, described in the above-mentioned ASEA pamphlet ZF-22-007E and in the ASEA catalogue B04-0028E. Such a selector switch has one single contact system with one main contact and two auxiliary contacts as well as two resistors connected in series with the auxiliary contacts. The number of contacts and resistors is therefore smaller than in the embodiment shown in Figure 2, and the selector switch is therefore simpler and economically more favourable.

Figure 3 shows an example of the construction of equipment according to the invention. The equipment is arranged on a platform 1, which is situated at the potential of the power line L. The platform is supported by insulating columns 2,3,4,5, which rest on base sockets 21,31,41,51. The units included in the equipment are only schematically shown. The main capacitor C of the capacitor bank is designated 6 in the figure. Unit 7 comprises overvoltage protective means in the form of varistors and spark gaps as well as the bypass breaker. The operating mechanism 13 of the bypass breaker is placed at ground potential and the operating movement is transferred to the breaker with the aid of an insulating rod 131. The switchable step capacitors are designated 8 and 9 in the figure and they are located on either side of an on-load tap-changer 10 for switching of the step capacitors. The contacts of the tap-changer can work in air. Alternatively, the tap-changer can be arranged in a tank, filled with oil or an electronegative gas, for example $SF_6$, for increasing the breaking capacity of the contacts. The operating mechanism 11 of the tap-changer is arranged at ground potential and the operating movement is transferred to the tap-changer via an insulating rod 111.

For safety reasons, equipment of the above-described kind is surrounded by a fence 16, which is schematically shown in Figure 4. The operating mechanism of the tap-changer can be placed outside this fence, the operating movement then being transmitted to the tap-changer via a rod or a tube 15, a bevel gear unit 14 and the insulating rod or tube 111. In this way, maintenance of the operating mechanism of the tap-changer can be carried out without having to take the series capacitor equipment out of operation.

The embodiments of equipment according to the invention described above are only examples, and a great many other embodiments are feasible within the scope of the invention laid down by the claims.

The three phases of series capacitor equipment according to the invention can be controlled either symmetrically, i.e. such that the active reactances of the capacitor banks of the three phases are always equal, or unsymmetrically, which under certain conditions may be advantageous.

The resistances of the tap-changers shown in the foregoing embodiments (e.g. R1,R2 in Figure 1) can be replaced by inductors.

## Claims

1. Series capacitor equipment for connection into a power line, comprising at least two series connected capacitors (C,C1-C4) for connection in series with the power line (L) and members (SS,LB,C1-C4) for switching of the reactance of the equipment by switching part of the capacitor equipment (C1-C4) in and out of the power line (L) while the power line is in operation, **characterized** in that said members comprise a plurality of mutually series-connected step capacitors (C1-C4) and switching members (SS,LB,10), connected to said step capacitors, for switching a variable number of series-connected step capacitors (C1-C4) in and out of the power line (L), that the switching members comprise a transformer on-load tap-changer (SS,LB,10) having sequentially operating contact members (FC1-FC4;FC11-FC44;MC) as well as impedance elements (R1,R2;R11-R42) arranged so as to prevent direct short-circuiting of step capacitors, and that the contact members of the tap-changer being arranged at the potential of the power line on a platform (1) insulated from ground, the drive device (11) of the tap-changer being arranged at ground potential and being mechanically connected to the contact members with the aid of electrically insulating members (111) for transmission of the operating movement.

2. Series capacitor equipment according to Claim 1, **characterized** in that said impedance elements (R1,R2;R11-R42) consist of resistors.

3. Series capacitor equipment according to Claim 1 or 2, **characterized** in that the contact members of the switching members are arranged in a breaking medium consisting of an electronegative gas.

## Revendications

1. Dispositif à condensateurs série, prévu pour la connexion dans une ligne de transport d'énergie, comprenant au moins deux condensateurs connectés en série (C, C1-C4), prévus pour être connectés en série avec la ligne de transport d'énergie (L) et des éléments (SS, LB, C1-C4) pour la commutation de la réactance du dispositif, par la commutation dans la ligne de transport d'énergie (L) et hors de celle-ci, d'une partie du dispositif à condensateurs (C1-C4), pendant que la ligne de transport d'énergie est en fonctionnement, **caractérisé** en ce que les éléments précités comprennent un ensemble de condensateurs incrémentiels mutuellement connectés en série (C1-C4) et d'éléments de commutation (SS, LB, 10) connectés aux condensateurs incrémentiels, pour commuter dans la ligne de transport d'énergie (L) et hors de celle-ci, un nombre variable de condensateurs incrémentiels connectés en série (C1-C4), en ce que les éléments de commutation comprennent une structure de changement de prise en charge pour transformateur (SS, LB, 10), ayant des éléments de contact fonctionnant séquentiellement (FC1-FC4 ; FC11-FC44 ; MC) ainsi que des éléments à impédance (R1, R2 ; R11-R42), connectés de façon à empêcher une mise en court-circuit directe des condensateurs incrémentiels, et en ce que les éléments de contact de la structure de changement de prise sont placés au potentiel de la ligne de transport d'énergie, sur une plate-forme (1) qui est isolée de la terre, le dispositif de commande (11) de la structure de changement de prise étant placé au potentiel de la terre et étant accouplé mécaniquement aux éléments de contact à l'aide d'éléments électriquement isolants (111), pour la transmission du mouvement de manoeuvre.

2. Dispositif à condensateurs série selon la revendication 1, **caractérisé** en ce que les éléments à impédance (R1, R2 ; R11-R42) sont constitués par des résistances.

3. Dispositif à condensateurs série selon la revendication 1 ou 2, **caractérisé** en ce que les éléments de contact des éléments de commutation sont placés dans un milieu de coupure qui consiste en un gaz électronégatif.

## Patentansprüche

1. Reihenkondensatoranordnung zur Einschaltung in eine Starkstromleitung, welche Anordnung mindestens zwei in Reihe geschaltete Kondensatoren (C, C1-C4) zur In-Reihe-Schaltung mit der Starkstromleitung (L) enthält und Glieder (SS, LB, C1-C4) enthält zum Schalten der Reaktanz der Anordnung während des Betriebes der Starkstromleitung durch Einschaltung beziehungsweise Herausschaltung eines Teils der Kondensatoranordnung (C1-C4) in die beziehungsweise aus der Starkstromleitung (L), **dadurch gekennzeichnet,**

daß die genannten Glieder eine Vielzahl von miteinander in Reihe geschalteten Stufenkondensatoren (C1-C4) sowie Schaltglieder (SS, LB, 10) enthalten, die an die genannten Stufenkondensatoren angeschlossen sind um eine veränderliche Anzahl von in Reihe geschalteten Stufenkondensatoren (C1-C4) in die Starkstromleitung (L) einzuschalten oder aus dieser heraus zu schalten,

daß die Schaltglieder einen unter Last schaltbaren Transformatoren-Stufenschalter (SS, LB, 10) enthalten, der sequenziell arbeitende Kontaktglieder (FC1-FC4, FC11-FC44, MC) sowie Impedanzglieder (R1, R2, R11-R42) enthält, die so angeordnet sind, daß sie einen direkten Kurzschluß von Stufenkondensatoren verhindern,

und daß die Kontaktglieder des Stufenschalters auf einer gegenüber Erde isolierten Plattform (1) auf dem Potential der Starkstromleitung angeordnet sind, wobei die Antriebsvorrichtung (11) für den Stufenschalter auf Erdpotential angeordnet ist und zur Übertragung der Betätigungsbewegung über elektrisch isolierende Glieder (111) mit den Kontaktgliedern verbunden ist.

2. Reihenkondensatoranordnung nach Anspruch 1, **dadurch gekennzeichnet,** daß die genannten Impedanzglieder (R1, R2, R11-R42) Widerstände sind.

3. Reihenkondensatoranordnung nach Anspruch 1 oder 2, **dadurch gekennzeichnet,** daß die Kontaktglieder der Schaltglieder in einem Ausschaltmedium angeordnet sind, welches aus einem elektro-negativen Gas besteht.

FIG.1

EP 0 289 975 B1

FIG.2

FIG.4

EP 0 289 975 B1

FIG.3

EP 0 289 975 B1